# EUROPEAN PATENT SPECIFICATION

(11) **EP 2 820 832 B1**
(45) Date of publication and mention of the grant of the patent: **29.04.2020**
(21) Application number: 13711313.0
(22) Date of filing: 27.02.2013
(51) Int. Cl.: H04M 3/42, H04M 3/38, H04M 11/00, H04L 12/28

(54) **INITIATING A COMMUNICATION USING A WIRELESS SECURITY KEY DEVICE**
INITIIEREN EINER KOMMUNIKATION UNTER VERWENDUNG EINES DRAHTLOSEN SICHERHEITSSCHLÜSSELS
ÉTABLIR UNE COMMUNICATION UTILISANT UN DISPOSITIF DE CLÉ DE SÉCURITÉ SANS FIL

(30) Priority: 27.02.2012 GB 201203319
(43) Date of publication of application: 07.01.2015
(73) Proprietor: Lax, Alexander, Bristol, Avon BS40 6ES (GB); Fischer, Frank, 81669 Munich (DE)
(72) Inventor: Lax, Alexander, Bristol, Avon BS40 6ES (GB); Fischer, Frank, 81669 Munich (DE)
(74) Representative: Molnia, David
(86) International application number: PCT/EP2013/053975
(87) International publication number: WO 2013/131796

(56) References cited:
- WO-A1-2004/112362
- WO-A1-2008/155546
- DE-A1-102008 019 032
- FR-A1- 2 900 488
- FR-A1- 2 961 652
- US-A1- 2003 063 735
- US-A1- 2008 040 242

## Description

### Technical Field

The present invention relates to communication systems and methods of operating communication systems, and in particular relates to methods and systems for providing secure communications.

### Background

In a typical communication system, such as a telecommunication system, an initiator of a communications event between two communications devices, such as a telephone call between two telephones, dials a telephone number associated with the telephone of the intended recipient of the call, and in response to the number being dialled a communications event between the initiator and the recipient is initiated. For this to occur it is necessary for the call initiator to know, or have access to, the telephone number of the recipient. This means that, in order for the recipient to be contacted, the telephone number of the recipient, which may be private, must be divulged to the initiator.

For example, in the mail and parcel delivery industry, it is often difficult for delivery service providers to deliver packages and other items of mail to premises such as a private houses or apartments, or business premises when the occupant is away. For example, during the working day many householders are at work or at school and are therefore not at home to receive deliveries.

One common solution to this problem is to provide a large secure mailbox, into which the packages can be delivered, but these are unsightly and, inevitably, the boxes are not able to receive all packages, since many will not fit.

Another common solution is to provide the facility for the recipient of a package to provide a contact telephone number to the delivery service provider, so that the delivery driver can contact the recipient of a package prior to delivery to arrange a delivery time. However, as explained above, this requires the recipient of the package to divulge their telephone number, which may be private, to the delivery service provider, and to the delivery driver.

GB2482985 describes a system in which a conventional doorbell button is replaced with a button that initiates a dial-up operation to establish two-way voice connection between a control unit and a remote telephone via a subscriber network to enable an owner of a premises to communicate with a visitor even when the owner is not at the premises.

FR2961652 discloses a method which involves analyzing a signal provided by a reader (7) of a short distance contactless reading label to recognize an input identifier (18) of an address directory (16). An address stored in the address directory is read for the recognized input identifier in case of recognition of the input identifier, where the address is selected from phone number, email address, instant messaging address, Web address under the form of uniform resource locator or internet protocol address and service address. This document uses a "General Identifier" which can be read from the label to help locate the correspondent's information. This "General Identifier" however is not intended to be a number with no useful information associated with it as in a random number, and therefore does not contain very specific and definite information to help with the analysis of the information and identification of the required address.

The present invention provides improvements to existing systems of communication. This object is solved by the subject matter of the independent claim. Preferred embodiments are defined by the dependent claims.

### Summary

According to a first aspect of the present invention, there is a provided communication system comprising:
a communications device arranged to conduct communications via a communications network to a first communications address;
a security component arranged to receive an input security key;
wherein the communications device is arranged to initiate a communications event to the first communications address in response to the security component determining that the input security key matches any one of a plurality of security keys available to the security component.

By initiating a communications event to the first communication address in response to determining that the input security key matches any one of a plurality of security keys available to the security component, that is initiating a communications event to the same communications address regardless of which one of the plurality of security keys available to the security component matches the input security key, the communication system provides a secure method of initiating the communications event. In particular, only authorised persons in possession of an authorised key can cause the communication system to initiate a communications event. Furthermore, providing a security component arranged to determine that the input security key matches any one of a plurality of security keys available to the security component enables the communication system to identify a person who has provided a received key. This, in turn, enables a recipient of the communications event to be made aware of the identity of an initiator of the communications event before accepting the communications event.

Further features and advantages of the invention will become apparent from the following description of preferred embodiments of the invention, given by way of example only, which is made with reference to the accompanying drawings.

### Brief Description of the Drawings

Figure 1 is a schematic diagram showing a secure communication system according to an embodiment;
Figure 2 is a schematic diagram showing a communications device for use in a secure communication system according to an embodiment;
Figure 3 is a schematic diagram showing an exemplary network in which a secure communication system according to an embodiment may operate; and
Figure 4 is a schematic diagram showing key device for use with a secure communication system according to an embodiment;
Figure 5 is a schematic diagram showing exemplary connections between elements of an exemplary network in which a secure communication system according to an embodiment may operate;
Figure 6 shows a sequence of key transmissions in accordance with an embodiment; and
Figure 7 shows a sequence of key transmissions in accordance with an embodiment.

### Detailed Description

Although throughout the following description, embodiments of the invention are described with reference to a mail delivery system, it will be understood that embodiments of the invention are not limited to this application, and will find application in other systems that require secure communications.

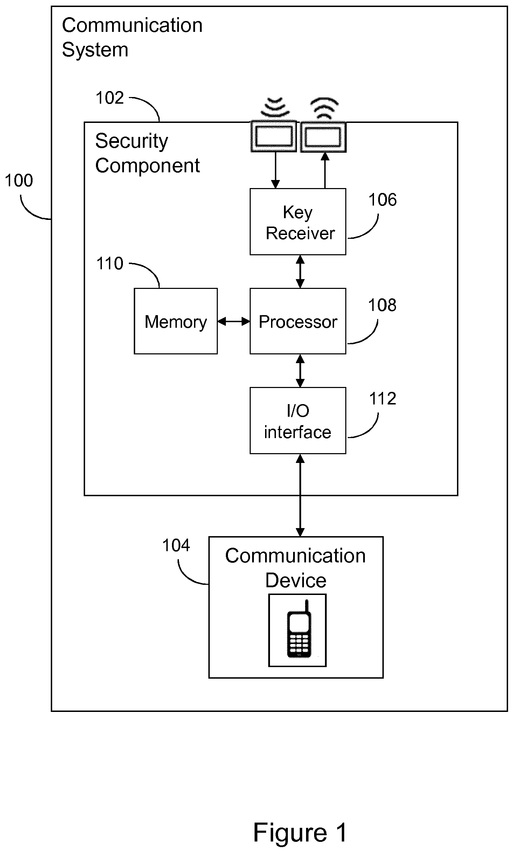

Figure 1 schematically illustrates the components of a communication system 100, in accordance with an embodiment of the invention. The communication system 100 comprises a security component 102 and a communications device 104. The security component 102 is arranged to determine whether a user of the communication system is authorised to initiate a communications event using the communications device 104. The communications device 104 is arranged to initiate communications events in response to receiving an appropriate command from the security component 102 indicating that an authorised user is attempting to initiate a communications event. Although, in figure 1, the security component 102 and the communications device 104 are shown as separate parts of the communication system 100, it will be understood that in some embodiments, they may be integral components of the same device; for example, the security component 102 may be a module of the communications device 104, or may be implemented in software, for example as an application, running on the communications device 104 and utilising the hardware features of the communications device 104.

In some embodiments, the communications event may include one or more of a telephone call, a video call, a Short Messaging Services (SMS) message, a Multimedia Messaging Services (MMS) message and an e-mail transmitted over an external public communications network, such as a subscriber network. In other embodiments, the communications event may include other forms of data communication.

To enable the security component 102 to authenticate a user, it stores a set of allowed keys. The security component 102 is arranged to receive keys and is arranged to compare received keys with the set of stored keys and determine whether a received key matches any one of the set of stored keys.

The security component 102 may be implemented, for example, in a computing device or an integrated circuit. The security component 102 may include a key receiver 106, a processor 108, a memory 110 and an input-output (I/O) interface 112.

The key receiver 106 is arranged to receive keys and pass the keys to the processor 106. The key receiver 106 may be arranged to receive keys via one or more transmission methods. The key receiver may include one or more of a radio frequency identification (RFID) receiver, an infrared (IR) receiver, a keypad, a keyboard, and a mechanical lock. Alternatively, the key receiver 106 may be any type of receiver capable of receiving a key.

In the embodiment of figure 1, the key receiver 106 shown is arranged to receive keys from an electromagnetic radiation detector.

In some embodiments, as shown in figure 1, the key receiver 106 is also capable of transmitting information, and may be connected to an electromagnetic radiation transmitter. In such embodiments, the key receiver 106 acts as an interface that enables two-way communication to be established between the security component 102 and device arranged to transmit a key.

The processor 108 is arranged to receive data corresponding to keys received by the key receiver 106 and compare the received keys with a set of keys stored in the memory 110. The processor 108 is arranged to determine if there is a match between a received key and any one of the set of keys stored in the memory 110. In the event that the processor 108 determines that there is a match between a received key and any one of the set of keys stored in the memory 110, the processor 108 is arranged to send a command via the I/O interface 112 to the communications device 104 to initiate a communications event.

The memory 110 is used to store a set of keys for authenticating a user of the communication system 100. By storing the set of keys in the memory 110, the security component can authenticate a received key without reference to any external device, such as a remote server via a communications network, for example. The memory 110 may include one or more of a flash memory, a hard disk drive and random access memory.

The I/O interface 112 is arranged to transmit commands to the communications device 104. In particular, the I/O interface 112 is arranged to transmit commands, generated by the processor 108 in response to the processor 108 determining that a communications event is to be initiated, to the communications device 104 in order to initiate communications events.

In some embodiments, the I/O interface 112 is also arranged to receive commands and data from the communications device 104. In particular, as described below, the I/O interface 112 may be arranged to receive information, such as a new set of keys which are to be stored in memory 110.

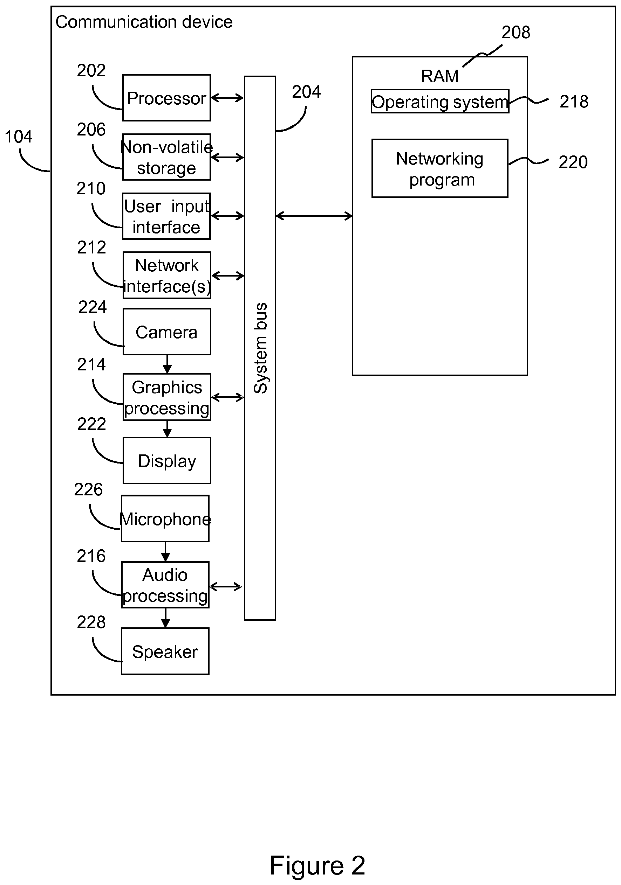

Figure 2 schematically illustrates the components of a communications device 104, which is an exemplary device used to illustrate the features of the present invention. The communications device 104 may take the form of a mobile telephone, a Smartphone, a computer, or any other suitable device. The communications device 104 includes a processor 202 that is able to transmit control messages to, receive status information from, and transmit data to and from components within the communications device 104 that are connected to a system bus 204, where these components may include a non-volatile storage device 206, random access memory (RAM) 208, a user input interface 210, one or more network interfaces 212, a graphics-processing component 214 and an audio processing component 216.

The processor 202, which in this embodiment is a microprocessor, processes instructions stored in the RAM 208 that have been loaded from the non-volatile storage device 206, which could be for example a flash memory or a hard disk drive. These instructions are in the form of computer software in the form of one or more programs that implement an operating system 218. The RAM 208 is also used by programs running on the processor 202 as a means of storing and accessing data in the form of electronic signals where the data is used during the execution of the programs.

The non-volatile storage 206 may contain a contact management application (referred to hereinafter as a contact list), that is used to store and provide access to contact items such as contact address information. The contact address information may define a destination for communications events (a destination address), which typically include contact details such as an email address, or a telephone number, for example. Telephone numbers stored in the non-volatile storage 206 may be used by the communications device 104 when initiating telephone calls, for example. By storing the contact details in the non-volatile storage 206, the communications device 104 can initiate calls to a destination address without reference to any external device, such as a remote server via a communications network, for example.

The user input interface 210 enables the user to enter user inputs to operate functions of the communications device 104. In some embodiments, the user input interface 210 may include a keypad or a touch screen.

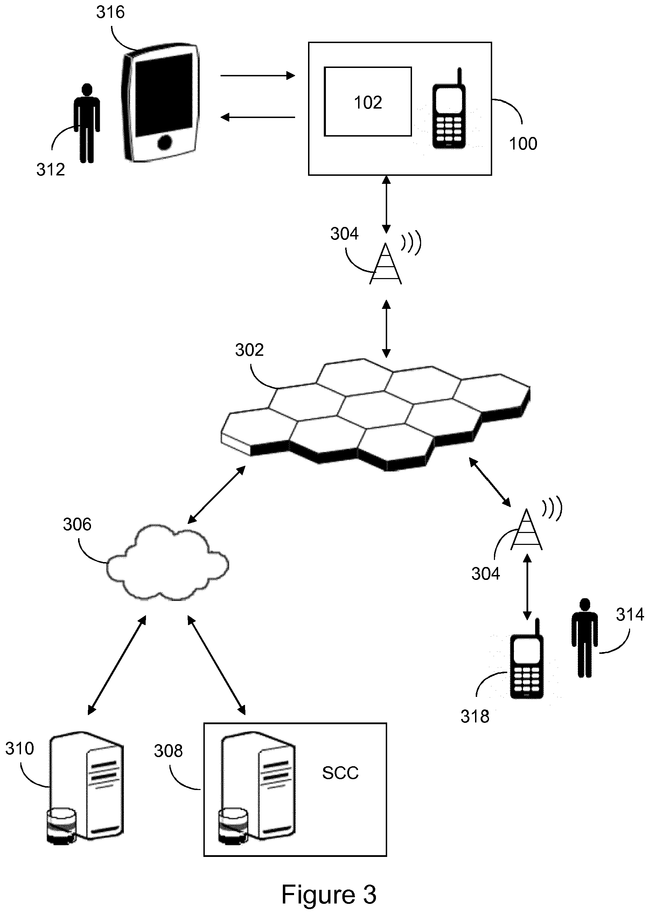

The network interface 212 (or a plurality of such interfaces) enable programs running on the processor 202 to transmit and receive data to and from a number of other devices and systems via a communications network (or a plurality of such networks), as described below with reference to figure 3.

The graphics processing component 214 enables the communications device 104 to display text and/or images on a display 222. In some embodiments, the display 222 may be integrally housed in the communications device itself (for example, where the communications device 104 is a Smartphone), and/or the display 222 may be a separate display device connected to the graphics processing component 214 via one or more of composite video, component video, Video Graphics Array, Digital Visual Interface, and High-Definition Multimedia Interface (HDMI) connections, or any other suitable wired or wireless connection. The display 222 may be an integral component of the communications device 104, and may be a touch-screen display. In some embodiments, where the communications device 104 is suitably equipped, the graphics processing component 214 may also enable the communications device 104 to receive and process images, such as photographs or video images, from a camera 224.

The audio processing component 216 enables the communications device 104 to receive audio signals, such as voice signals, via a microphone 226, and to emit sounds, such as voice sounds via a speaker 228.

Figure 3 schematically illustrates communication links that may be made by the communications device 104 using the network interface 212. The network interface 212 (or a plurality of such interfaces) may allow programs running on the processor 108 to transmit and receive data to and from a number of other devices and systems via a communications network 302 (or a plurality of such networks). The data may be data representative of voice communications, or may be Short Messaging Service (SMS) data, video data, e-mail data, or any other kind of data.

The network interface 212 (or the plurality of such interfaces) may include a radio access network interface (or a plurality of such interfaces) that is able to communicate with a wireless access node 304 such as a base station or a wireless access point that provides access to the communications network 302 (or a plurality of such networks). The network interface 212 (or plurality of such interfaces) may be able to connect to the wireless access node 304 using one or more of a number of radio access technologies including Global System for Mobile Communications (GSM), Universal Mobile Telecommunications System (UMTS), Long Term Evolution (LTE), fixed wireless access (such as IEEE 802.16 WiMax), and wireless networking (such as IEEE 802.11 WiFi). The communications network 302 and/or wireless access node 304 may also provide access to the Internet 306.

The network interface 212 (or the plurality of such interfaces) may also include a modem and/or an Ethernet card or interface for use with a corresponding communications network (or networks) 302 such as the Internet 306 and/or a private data communications network.

The operating system 218 may provide messaging procedures for sending and receiving messages such as Short Messaging Services (SMS), Multimedia Messaging Services (MMS) and e-mail via the wireless access node 304 and/or the communications network 302 by using the network interface 212. These messaging procedures may be accessible to other programs running on the processor 202 via the programmatic interface provided by the operating system 218.

The operating system 218 may include a networking program 220 that allows communication between programs running on the processor 202 and external devices via the network interface 212 and communications network (or plurality of such networks) 302 using networking protocols such as, for example, the Transmission Control Protocol (TCP) or the User Datagram Protocol (UDP). External devices that can be communicated with via the communications network (or networks) 302 may include other communications devices such as mobile telephones and landline telephones and/or may include a remote data processing device such as a System Control Centre (SCC) 308 and/or other remote servers 310. The networking program 220 and/or networking procedures may be accessible to other programs running on the processor 202 via the programmatic interface provided by the operating system 218.

In order to access content and services provided by remote data processing devices such as the SCC 308 and/or the one or more remote servers 310 a user of the communications device 104 may use a client program on the communications device 104. The client program may be pre-loaded onto the communications device 104 before purchase of the communication system 100 by the user. Alternatively the client program may be downloaded and installed onto the communications device 104 by the user; for example the user may use an application store program provided by the operating system 218 to download (and install) the client program from an application store server via the communications network (or networks) 302.

Operation of the communication system 100 will now be described with reference to figures 1 to 4.

In use, a call initiator 312, who may be a user wishing to initiate a communications event to a call recipient 314, operates a key device 316 which causes a key to be received by the key receiver 106 of the security component 102 of the communication system 100. The call recipient 314 may be the owner of the communication system 100, and may be unknown to the call initiator 312.

In response to the key receiver 106 receiving a key from the key device 316, the key receiver 106 passes data corresponding to the key to the processor 108. The processor 108 then compares the data corresponding to the received key with a set of keys stored in memory 110, and determines whether the received key matches any one of the set of keys stored in memory 110.

In the event that the processor 108 determines that the received key matches any one of the set of keys stored in memory 110, the processor 108 sends a command via the I/O interface 112 to the communications device 104 to initiate a communications event to a predefined communications destination stored in the non-volatile storage 206.

The I/O interface 112 passes an instruction to the communications device 104 to initiate a communications event. The instruction to initiate a communications event may be received, for example, by a network interface 212 configured to interface with the I/O interface 112 of the security component 102. For example, the communications device 104 may be configured to connect to the security component by one or more of a Bluetooth connection, a WiFi connection, a Universal Serial Bus (USB) and a serial connection or by any other suitable connection.

In response to receiving an instruction to initiate a communications event, the communications device 104 may store the instruction in RAM 208 for access by the networking program 220. In response to the networking program 220 determining the presence of the instruction, the networking program 220 may retrieve communications event destination information, such as a telephone number, from the non-volatile storage 206, and initiate a communications event via the network interface 212 and the communications network (or networks) 302 to the destination address.

By initiating the communications event only in response to the security component 102 determining a match between the received key and any one of the set of stored keys enables the destination of the call to be unknown to the initiator thereby maintaining the privacy of the call recipient.

The destination address may be stored in the non-volatile storage by the user using the user input interface - or the user may remotely configure the destination address by accessing an account held on the SCC 308 and causing the SCC 308 to send the destination address information to the communications device 104, as described below.

In the example shown in figure 3, the destination address is a private telephone number of the call recipient 314, and in response to the communications device receiving an instruction to initiate a communications event, the communications device 104 initiates a telephone call via a mobile telephone network (or networks) 302 to a telephone number corresponding to a mobile telephone 318 of the call recipient 314.

In some embodiments, the communications device 104 may be configured to store telephone numbers of landline telephones and/or e-mail addresses, and/or may be configured to initiate one or more of an SMS message, an e-mail, an MMS message, or a video call.

The call recipient's mobile telephone 318 may also contain stored contact information, including a telephone number associated with the communications device 104. The call recipient's mobile phone 318 may use a telephone number associated with the communications device 104 to identify details of an incoming telephone call - for example, a telephony application running on the recipient's mobile telephone 318 may look up a name of the communications device corresponding to the telephone number associated with an incoming telephone call, and present that name to the call recipient along with an alert notification (e.g. an audible alert for the call). For example, a contact list stored in the call recipient's mobile telephone 318 may include a contact name listing for the communications device 104, such as "home", that is displayed when the communications device 104 initiates a communications event with the call recipient's mobile telephone 318.

In addition, the call recipient's mobile telephone 318 may have access to information associated with the key used to initiate the communications event. In this case, the call recipient's mobile telephone 318 may lookup information relating the particular key to an individual to which the key was issued, and display information identifying the individual call initiator 312 who caused the communications event to be initiated to the call recipient 314.

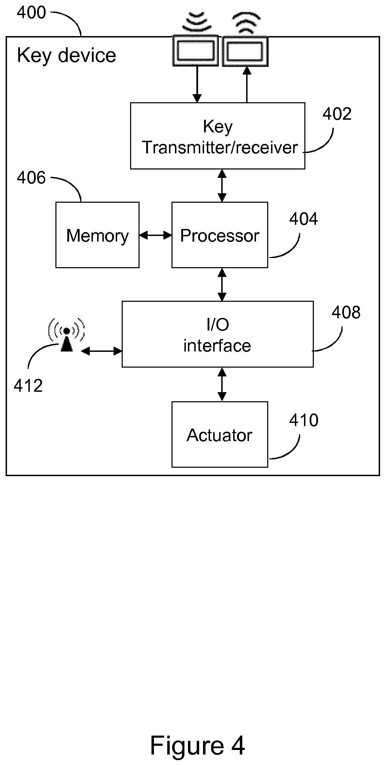

In some embodiments, as mentioned above, the security component 102 is arranged to receive keys transmitted by the key device 316. Figure 4 shows an exemplary key device 400. The exemplary key device 400 may be an electronic device capable of transmitting a key. The key device 400 may be in the form of a hand held computer or a fob or tag. The key device 400 may include a key transmitter 402 (which in some examples may also be a receiver), a processor 404, and memory 406. The key device 400 may also include an I/O interface 408 that enables the processor 404 to receive inputs. For example, the I/O interface 408 may receive user input via an actuator 410 to cause the processor 404 to transmit a key stored in memory 406. By providing an actuator by which an initiator can transmit a key, a key can be transmitted without the initiator needing to be aware of codes making up the key.

In some examples, the I/O interface 408 may be capable of performing other functions such as, for example, receiving other inputs interpretable by the processor 404, and displaying information on a display (not shown); the I/O interface may have such functionality where the key device 400 is, for example, a hand-held computer.

In some examples, the key device 400 may be arranged to transmit keys from an electromagnetic radiation emitter and/or receive keys with an electromagnetic radiation receiver. In some examples, key transmitter/receiver 402 may be one or more of a radio frequency identification (RFID) transmitter/receiver arranged to transmit/receive electromagnetic radiation and an infrared (IR) transmitter/receiver arranged to transmit/receive keys.

In some examples, as shown in figure 4, the key device 400 may also be capable of receiving keys and may include an electromagnetic radiation receiver. In such embodiments, the key device 400 acts as an interface that enables two-way communication to be established between the key device 400 and a security component 102.

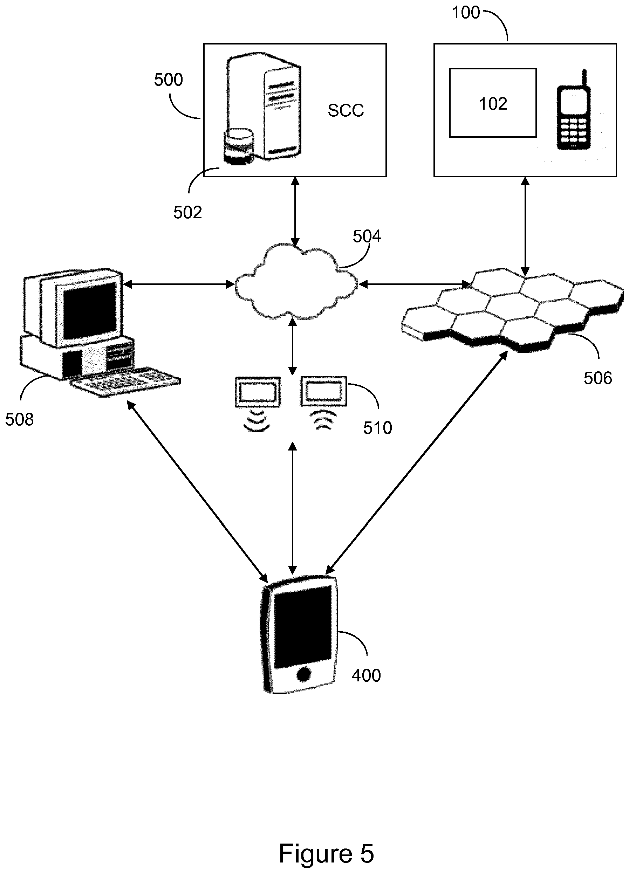

In some examples, the key device 400 may include its own network interface 412 (or plurality of such interfaces) and be able to communicate with the SCC 308 via one or more communications networks 302. For example, the key device 400 may be able to connect to the SCC 308 and in some examples may receive keys from the SCC 308, as described below with reference to figure 5.

Figure 5 shows an exemplary arrangement by which a database in the SCC 308 may be utilised. In this arrangement, an SCC server 500 containing a SCC database 502 is connected to the internet 504. The SCC server 500 may be a remote computer server (or a plurality of computer servers) with a network interface via which the SCC 308 may be connected to a communications network (or a plurality of such networks). The SCC server 500 will typically be operated by a SCC service provider who is responsible for maintaining data stored in the database 502.

The database 502 of the SCC server 500 may contain information relating to the operation of the communication system 100. The database 502 may include information identifying the communications device 104 itself (for example, the telephone number or some other identifier of the communications device 104). The database 502 may also include, for example, owner account entries listing information relating to the destination addresses that the owner wishes the communications device 104 to initiate communications events with, and preferences relating to an order in which the communications device should attempt to initiate communications events (for example, the owner may prefer to be contacted first on a landline and in the event that the communications device 104 cannot establish a communications event with the landline, the owner would like to be contacted on a mobile telephone). The database 502 may also store information relating to the keys and codes stored or to be stored in the memory 110 of the security component 102 and/or in the memory 406 of the key device 400.

The SCC server 500 may consult the database 502 in order to provide an authorised call initiator 312 (or their key device 400) with appropriate keys in order that the initiator 312 can initiate communications events via the communication system 100. For example, the SCC server 500 may transmit the codes relating to the keys to the key device 400 of an initiator 312 at an appropriate time. The database 502 may then include information associating keys that have been issued with particular initiators 312. This information may then be accessible by the owner of the communication system via a client interface, for example, as described below. In some embodiments, this information may also be transmitted to the communications device 104 such that when a communications event is initiated, the communications device 104 can transmit the information to the device 318 of the recipient 314 so that the recipient 314 can be made aware of the identity of the initiator 312.

The SCC server 500 is able to connect to the communication system 100 via the internet 504 and a communications network 506 and transmit and/or receive data to and/or from the communication system 100 as described above.

One or more client computers 508 (running client software), are able to connect to the SCC server 500 via the internet 504. The client computers 508 may run client software that enables users of the system, such as authorised initiators, recipients, and owners of communication systems, to access the database 502 and, subject to restrictions imposed by the SCC service provider, amend information stored in the database 502.

In some examples, a short-range radio communication system 510 may be provided, that can connect to the SCC server 500 via the internet 504 to access the SCC database 502. For example, the short-range communication system 510 may be provided to authorised initiators in order that they may obtain authorised keys from the SCC server database.

A key device 400 may be able to communicate with the SCC server 500 via either the short-range communication system 510 or the client computer 508 (via a suitable interface, such as USB or Bluetooth), or via the communications network 506, in order to access information, such as keys, stored in the database 502.

In some embodiments, the SCC server 500 can control the destination address of the communications event.

In some embodiments, the SCC server 500 can determine the set of stored keys; that is the keys that, when received from the key device 400, will initiate the communications event.

In some embodiments, the SCC server 500 can transmit data to the communication system 100 over a communications network such as the communications network 506 over which the communications event is initiated and/or via the internet 504. The SCC server 500 may be enabled to, for example, transmit communications event destination information (destination addresses) to the communications device 104 and may communicate the set of stored keys to the security component 102 via the communications device 104, for example. By communicating sets of stored keys and destination addresses to the communication system 100, the SCC server 500 can update the set of stored keys and/or the destination addresses remotely.

In some embodiments, the SCC server 500 provides a client interface, with which the owner of the communication system 100 can interact with the SCC server 500 to cause the SCC server 500 to update information stored in the communication system 100. In certain examples, the owner of the communication may be the call recipient 314, and may wish to change or update the contact address, or addresses, such as one or more telephone numbers, to which the communications device 104 will initiate communications events. In certain examples, the owner of the communication system may wish to cause the SCC server 500 to update the set of stored keys; for example, if the number of stored keys is depleted, the owner of the communication system may wish to replenish the set of stored keys. By providing the SCC server with a client interface, the owner of the communication system 100 is able to cause the SCC server 500 to communicate updates to the communication system 100 remotely.

Once the owner of the communication system 100 has caused the SCC server 500 to communicate updated information to the communication system 100, future attempts by an initiator 312 to initiate a communications event using the communication system 100 will be performed using an updated set of stored keys and/or the communications event will be initiated to the updated destination address. In this case, the security component 102 compares a received key with a set of stored keys that has been received from the SCC server 500, and/or initiates a communications event to a destination address received by the SCC server 500, without reference to the SCC server 500. This enables a communications event to be initiated with a minimum amount of communication between the communication system 100 and the SCC server 500, thereby reducing the running costs of the communication system 100 (associated with maintaining a network connection, for example) as well as reducing the power consumed by the communications device 104 and the time required for communication and processing of data.

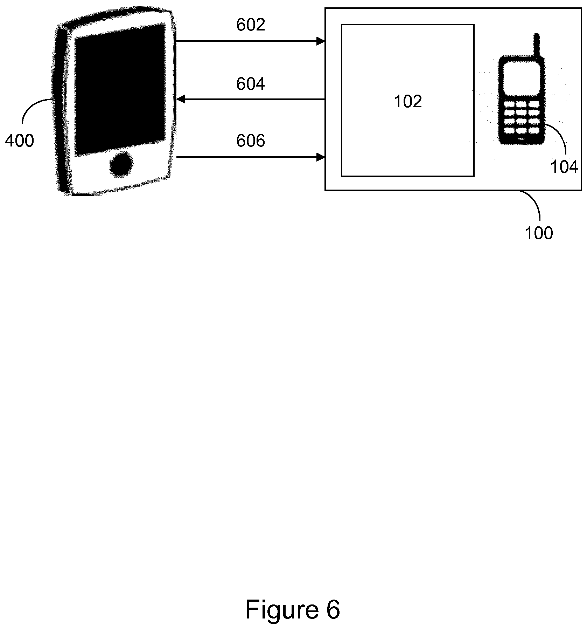

Figure 6 shows a particular sequence of key transmissions between a key device 400 and the communication system 100 according to an embodiment. In operation, an initiator 312 activates the key by, for example, aiming the key device 400 (which may be a key-fob or hand-held computer) in the direction of the key receiver 106 and pressing an actuator 410 on the key device 400 as described above. Of course, it will be understood that other ways of initiating the key signal sequence are possible.

Actuation of the key device 400 causes the key device 400 to transmit a first key 602 to the key receiver 106 of the security component 102.

In response to receiving the first key 602, the security component 102 passes the received first key 602 to the processor 108 of the security component 102. The processor 108 then compares the first key 602 with a first set of stored keys and determines whether a match exists between the first key 602 and any one of the first set of stored keys.

In response to determining a match between the first key 602 and the first set of stored keys, the processor 108 retrieves a second key 604 from the memory 110 and transmits the second key 604 via the key transceiver 106 to the key device 400.

In response to receiving the second key 604, the key device 400 passes the second key 604 to the processor 404 of the key device 400, which compares the second key 604 with a second set of keys stored in the memory 406 of the key device 400 to determine whether the second key 604 matches any one of the second set of keys.

In response to determining a match between the second key 604 and the second set of stored keys, the processor 404 of the key device 400 retrieves a third key 606 and causes the key transmitter 402 to transmit the third key 606 to the key receiver 106 of the security component 102.

In response to receiving the third key 606, the security component 102 passes the received third key 606 to the processor 108. The processor 108 then compares the third key 606 with a third set of stored keys and determines whether a match exists between the third key 606 and any one of the third set of stored keys.

In response to determining a match between the third key 606 and the third set of stored keys, the processor 108 sends a command via the I/O interface 112 to the communications device 104 to initiate a communications event using a destination address stored in the non-volatile storage 206 of the communications device 104.

In some embodiments, the communications event will be a telephone call and the communication between the initiator 312 and the recipient 314 begins when the recipient 314 answers the telephone call.

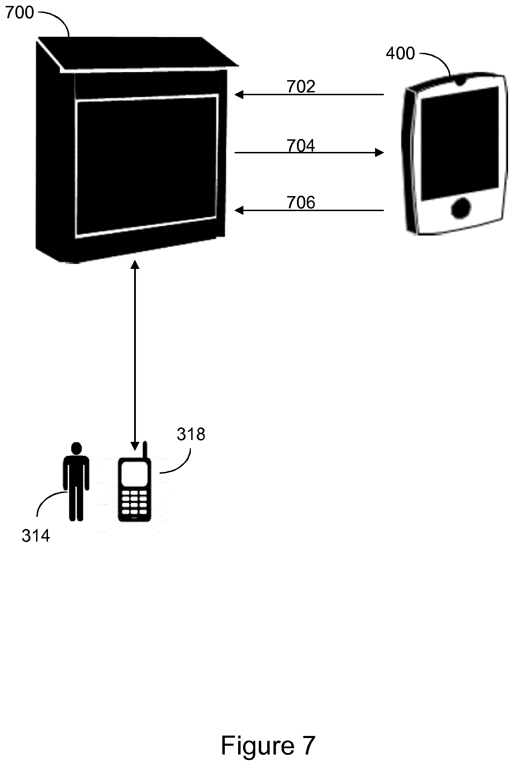

Figure 7 shows an exemplary implementation of the communication system 100 according to embodiments of the present invention. In this example, the communication system 100 is installed in a mailbox 700. The mailbox 700 is a compartment suitable for receiving small items of mail that are delivered by a delivery person, hereinafter referred to as a deliverer. In circumstances where items of mail are too large to be securely delivered into the mailbox 700, the deliverer may wish to speak to or otherwise communicate with the recipient 314 or the owner of the mailbox 700 in order to complete the delivery without having to arrange to return at another time. In such circumstances, if the deliverer is in possession of a suitable key device 400, they can initiate a communications event by, for example initiating a key sequence by pressing an actuator 410 as described above. The key device 400 may then begin a sequence of exchanging keys with the security component 102 of the communication system 100 as described above with reference to figure 6.

In this example, the first key 702 may be a code identifying the key device 400 (a particular key-fob or hand-held computer). The first key 702 is a unique code, which may identify a delivery company and an individual deliverer. In the context of the mailbox implementation, the first key 702 will hereinafter be referred to as a Deliverer Identity Code (DIC).

A corresponding list of DICs (the first set of keys) is stored in the memory 110 of the security component 102 of the communication system 100 associated with the mailbox 700. The list of DICs may include a list of authorised DIC keys 702 that may be validly transmitted by key device 400 (the key-fob or hand-held computer) and information, associated with each key 702, relating to an individual user of the key device 400 (that is, an individual deliverer).

The information relating to an individual deliverer, hereinafter referred to as Deliverer Identity Information (DII), may include information about the employer of the deliverer, the name of the deliverer, and an employee identification number of the deliverer, for example.

Once the security component 102 has received the DIC, it is compared with a set of authorised DICs stored in the memory 110 of the security component 102. This list may have been retrieved from, or sent by, the database of the SCC server 500 as described above with reference to figure 5.

If the DIC received from the key device 400 matches any one of the list of authorised DICs, then the security component 102 transmits a second key 704 to the key device 400. The second key 704, hereinafter referred to as a Mailbox Identity Code (MIC), is a code uniquely identifying the mailbox 700.

Once the key device 400 receives the MIC, it is compared with a set of authorised MICs stored in the memory 406 of the key device 400 (the second set of keys). The list of MICs may have retrieved from, or sent by, the database 502 of the SCC server 500 as described above with reference to figure 5.

In response to the key device 400 determining that the received MIC matches at least one of the set of MICs stored in the memory 406 of the key device 400, the key device 400 transmits a third key 706, which is a random code sequence (RCS), to the security component 102 associated with the mailbox 700. In some embodiments, a plurality of RCSs may be stored in the memory 406 of the key device 400.

In some embodiments, once a given RCS has been transmitted, the key device 400 does not transmit that particular RCS again. In some embodiments, once a given RCS has been transmitted, it is removed from the memory 406 of the key device 400.

A corresponding list of RCSs (the third set of keys) is stored in the memory 110 of the security component 102 and, in response to receiving an RCS from the key device 400, the processor 108 of the security component 102 compares the received RCS with the stored list of RCSs and determines whether the received RCS matches any one of the stored RCSs.

In some embodiments, once a given received RCS is determined to match one of the stored RCSs, that RCS is removed from the list of RCSs stored in the memory 110 of the security component 102. This prevents the key device 400 from being cloned or copied, since every time a delivery is made, a unique randomly generated code is transmitted by the key device 400.

Finally, in response to determining that a received RCS matches one of the stored list of acceptable RCSs, the security component 102 sends a command via the I/O interface 112 to the communications device 104 to initiate a communications event.

In some embodiments, some or all of the information associated with the DII may be sent to the recipient 314 as part of the communications event. For example, the DII may be sent in the form of a message (such as an SMS message) before a telephone call is initiated. By sending a message in advance of a telephone call, the recipient 314 is forewarned that a telephone call should be expected from the deliverer, and is made aware of the identity of that deliverer.

In some embodiments, where the communications event includes a telephone call, the communications event ends when either party to the telephone call (that is, the initiator 312 or the recipient 314) releases the call. In other embodiments, the communications event may end after a pre-defined time or by an event defined by the communications network 302.

In some examples, the deliverer may be able to release the call using a function provided by the key device 400.

In response to the communications event ending, the communication system 100 may revert to an idle state and await receipt of another key, in order to reduce power consumption.

In some embodiments, the communication system 100 may be arranged to reduce power to some or all of the elements of the communication system 100 when the communications device 104 is not in use. This may involve only providing power to the security component 102 and/or providing a separate power circuit that can detect when a key is to be received and can power up the security component 102 and/or the communications device 104 accordingly. In embodiments where the communications device 104 is battery-powered (for example, where the communications device 104 is a Smartphone) this enables the battery power of the communications device 104 to be preserved, and in embodiments where the communications device 104 is powered by an external power supply (such as a mains power supply), this enables the use of power and the associated costs to be minimised.

In some examples, the security component 102 may include, for example, an infrared detector to detect transmission of infrared radiation from the key device. In one example, the infrared detector may be an infrared-sensitive semiconductor photodetector, which conducts current when illuminated with infrared radiation. In one example, the current is used to switch the state of a D type flip-flop, the output of which is used to switch on the communication system 100. When the communication system 100 is no longer in use (for example, if a predetermined time has elapsed after receiving infrared illumination without a communications event being initiated, or once an initiated communications event is terminated), the D type flip-flop returns to its original state, and the communication system 100 powers down, until, another infra red signal is received and the communication system 100 is powered up again.

In some embodiments, upon activation, the communication system 100 connects to SCC server 500 via, for example, the communications network 302 in order to retrieve or receive updates that it was unable to retrieve or receive in its power saving setting. Typically, the time taken for an update message to be sent to the communication system 100 through the network 302 is variable and may depend on network conditions and, for example, network administrator settings. Therefore, in order to reduce or remove this delay, upon activation, the communication system 100 sends a message to the SCC server 500 as soon as the communications device 104 has connected to the communications network 302. This message identifies the particular mailbox 700 (or its associated communication system 100) and requests the SSC server 500 to send all new information to the mailbox 700 (or its associated communication system 100) as soon as possible.

In practice, it has been shown to take around 15 seconds for information to be received by the mailbox 700 after the initial message has been sent using the SMS message system on a GSM network in the UK. Therefore, this system enables a quick and reliable method of updating information stored in the communication system 100 of a mailbox 700, and allows the communication system 100 associated with the mailbox 700 to activate, update, and switch itself off quickly, thereby reducing power consumption.

In systems where power is not supplied by a standalone battery or where power consumption is not so critical, then the communication system 100 may remain connected to the communications network 302 and may receive updates as soon as they are made available by the SSC server 500, via a push notification system, without the communication system 100 requesting the update data.

In some embodiments, the mailboxes 700 and their associated communication systems 100 form a mailbox delivery system comprising multiple (perhaps millions) of mailboxes 700 serviced by many (perhaps thousands) of deliverers working for various delivery companies.

In some embodiments, owners of mailboxes 700, such as private owners, companies or other organisations (all recipients) can select which delivery company or companies they wish to allow to use the mailbox delivery system. Each allowed delivery company operating in the mailbox delivery system may provide key devices 400 (such as key-fobs). In some examples, the functionality of the key device 400 could be added to existing hand-held computers used by deliverers by adding or updating the delivery software package used in the existing hand-held computers or terminals. Each key device 400 may be associated with a particular deliverer. This ensures that their activities can be identified.

In order to ensure that the key devices 400 cannot be cloned or copied, every time a delivery is made, a unique randomly generated code (RCS) is transmitted by the key device 400.

Unlike other key systems, such as garage door openers or car entry systems, the code (key) is not a pseudo-random code, which can be cloned, but a totally random code. With a 128-bit random code, 10¹⁵ different random codes could be generated and used in the mailbox delivery system. This enables over 100 million mailboxes to receive 500 deliveries each year for over 100 years using a different random code for each delivery, with a chance of choosing a valid code at less than 1 in 10²⁵.

In order that the security component 102 associated with a mailbox 700 can determine a match between a received random code transmitted by a key device and one of the stored correct random codes, the communication system 100 either could store all the random codes or could communicate with the SCC server 500.

In embodiments where the communication system 100 stores all of the random codes, the memory 110 of the security component required to store all the codes is 10¹⁵ × 16 bytes, which comes to 1.6 × 10¹⁶ bytes or 1,600 Terabytes. Storing this quantity of codes minimises the amount of communication required between the communication system 100 and the SCC server 500, for reasons of power efficiency and elapsed time. It is expected that in the future, this quantity of memory will be readily and cheaply available.

In embodiments where the expense of providing this quantity of memory cannot be justified, it may be preferable to reduce the memory requirement. In some embodiments, the memory requirement of the security component 102 may be as little as a few tens of Megabytes, and the range of keys (codes) that the security component 102 of each mailbox 700 stores is limited accordingly. In such embodiments, the MIC is transmitted to the key device 400 after the security component 102 of the mailbox 700 has received the DIC from the key device 400. When a mailbox 700 is supplied and installed, a sufficient number of random codes is stored in the available memory 110 of the security component 102. For example, 1 Megabyte of data storage would be more than sufficient to store codes (keys) for 5 deliveries a day for more than 30 years. As described above, if required, updates to this data can be sent to the communication system 100 from the SCC server 500 via the communications network 302.

Each key device 400 needs to store a sufficient number of codes (keys) for each of the mailboxes 700 that are within range of the associated deliverer and for the maximum number of deliveries that the deliverer will make before the key device 400 is updated.

Updates to the key device 400 may, for example, be scheduled to occur on a regular basis, such as once a day or once a month or at some other interval. Updates may also be used to add or remove customers from the system. Since it only requires less than 2 Kilobytes to provide data for 100 deliveries to one mailbox 700, the updating could be performed via the communications network 302 (such as a mobile telephone network) as and when new customers are added.

In some examples, updates to the key device 400 may be scheduled to coincide with a schedule for recharging the batteries of the key device 400 (or some other maintenance schedule). This would allow the updates to be performed without causing any extra disruption to use of the key device 400 and the operation of the mailbox delivery system. Such updates could therefore be performed via a short-range communications network device 510.

In an exemplary key device 400 with 1.6 Gigabytes of memory 406, an individual deliverer working in the vicinity of 1 million mailboxes could make 100 deliveries to any mailbox per month. The cost of this quantity of storage is not particularly high and is expected to reduce in future.

The above embodiments are to be understood as illustrative examples of the invention. Further embodiments of the invention are envisaged. For example, communications events between a deliverer and a recipient in the mailbox system of figure 7 could be initiated on the basis of only the DIC. In this case, a set or list of DICs (representing authorised deliverers), and/or a superset of the DICs (representing authorised delivery companies) may be stored in the memory 110 of the security component 102 of the mailbox 700 (perhaps during manufacture or on installation via a download from the SCC server 500 via the communications network 302). In response to receiving, at the security component 102, an authorised DIC from a key device 400, the communication system 100 initiates a communications event (such as a telephone call). To increase the security of the list of DICs, updates to the list of DICs may be sent from the SCC server 500 to the mailbox 700 via, for example, the communications network 302 (such as a mobile telephone network). In certain examples, the SCC server 500 may be arranged to schedule updates, or may be arranged to detect events such as a cloning or copying of the DICs, and may update all relevant mailboxes 700 to ensure that cloned or copied DICs are removed from the list of authorised DICs.

Furthermore, although the keys described above are described as being sets of keys stored in memory, it will be understood that other methods of providing keys are possible. For example, the keys may be generated by a processor running an algorithm for a time and/or event related one time passcode.

In some embodiments, the random code used to initiate a communications event may be further encrypted in accordance with a time dependent algorithm and the codes stored in the security component may be encrypted accordingly such that codes matching the one or more codes available to the security component change over time. For example, the algorithm may change a given random code periodically. In this way, if a random code is obtained by an unauthorised person, the likelihood of the obtained code being used to initiate an unauthorised communications event is reduced.

Although the implementation of the communication system is described above in relation to a mailbox delivery system, it will be understood that the communication system will have application in other systems where secure communication is required.

The scope of protection is defined by the appended independent claim.

## Claims

1. A mailbox comprising a communication system, wherein the communication system comprises:
a communications device arranged to conduct communications via a communications network to a first communications address; a security component
arranged to receive an input security key;
wherein the communications device is arranged to initiate a communications event to the
first communications address in response to the security component determining that the input security key matches any one of a plurality of security keys available to the security component; **characterised in that** the set of security keys and the communication addresses can be updated remotely by a server at a predetermined time.

2. A mailbox according to claim 1, wherein
the plurality of security keys available to the security component comprises a set of random sequence codes.

3. A mailbox according to claim 1 and
**characterised in that** the mailbox receives from a server associated with the first communication address via the same communications network data updates comprising any changes in the plurality of security keys and/or communications addresses to be used by the mailbox;
wherein the communication device then communicates to one of the communication addresses a communication event.

4. A mailbox comprising a communication system according to any of the claims 1 to 3, wherein the communications device is arranged to store one or more communications addresses and initiate communications events to the one or more addresses.

5. A mailbox comprising a communication system according to claims 1 to 4, wherein the security component is arranged to receive an electromagnetic signal containing the input security key.

6. A mailbox comprising a communication system according to one of the claims 1 to 5, wherein, in response to identifying that a first input security key matches any one of the first set of security keys, the security component is arranged to transmit a first output security key, the first output security key comprising data identifying the communication system.

7. A mailbox comprising a communication system according to claim 6, wherein a second input security key is received by the security component having been transmitted by a wireless key device in response to the wireless key device receiving the first output security key.

8. A mailbox comprising a communication system according to claim 7, wherein the communications event to the first communications address is initiated in response to the security component determining that the second input security key matches any one of a plurality of a second set of security keys.

9. A mailbox comprising a communication system according to one of the claims 7 to 8, wherein the first input security key comprises data identifying the wireless key device.

10. A mailbox comprising a communication system according to one of the claims 5 to 9, wherein the first output security key includes data identifying the mailbox.

11. A mailbox comprising a communication system according to one of the claims 1 to 10, wherein the communications event is a telephone call and/or a transmission of data and/or an sms message and/or an e-mail and/or a video call.

12. A mailbox comprising a communication system according to any one of the preceding claims, wherein the communications device has a first, power saving, mode, in which the communications device is not connected to the communications network, and a second, operating, mode in which the communications device is connected to the communications network, wherein the communications device is arranged to switch from the first mode to the second mode in response to receiving the input security key.

## Patentansprüche

1. Ein Postkasten , der ein Kommunikationssystem aufweist,
wobei das Kommunikationssystem aufweist:
eine Kommunikationsvorrichtung, die so eingerichtet ist, dass sie Kommunikationen über ein Kommunikationsnetzwerk an eine erste Kommunikationsadresse auslöst;
eine Sicherheitskomponente, die so eingerichtet ist, dass sie einen Eingangssicherheitsschlüssel erhält;
wobei die Kommunikationsvorrichtung so eingerichtet ist, dass sie ein Kommunikationsereignis an die erste Kommunikationsadresse auslöst als Reaktion auf die Feststellung der Sicherheitskomponente, dass der Eingangssicherheitsschlüssel mit einem von mehreren Sicherheitsschlüsseln übereinstimmt, die der Sicherheitskomponente zur Verfügung stehen; **gekennzeichnet dadurch, dass** der Satz von Sicherheitsschlüsseln und die Kommunikationsadressen zu einer vorbestimmten Zeit durch einen Server aus der Ferne aktualisiert werden können.

2. Ein Postkasten gemäß Anspruch 1, wobei
die Vielzahl der der Sicherheitskomponente zur Verfügung stehenden Sicherheitsschlüssel eine Reihe von Zufallssequenzcodes aufweist.

3. Ein Postkasten gemäß Anspruch 1 und
**gekennzeichnet dadurch, dass** der Postkasten von einem Server, der der ersten Kommunikationsadresse zugeordnet ist, über dasselbe Kommunikationsnetzwerk Datenaktualisierungen empfängt, die alle Änderungen in der Vielzahl der von dem Postkasten zu verwendenden Sicherheitsschlüssel und/oder Kommunikationsadressen aufweisen;
wobei die Kommunikationsvorrichtung dann an eine der Kommunikationsadressen ein Kommunikationsereignis kommuniziert.

4. Ein Postkasten, der ein Kommunikationssystem gemäß einem der Ansprüche 1 bis 3 aufweist, wobei die Kommunikationsvorrichtung so eingerichtet ist, dass sie eine oder mehrere Kommunikationsadressen speichert und Kommunikationsereignisse an die eine oder mehrere Adressen initiiert.

5. Ein Postkasten mit einem Kommunikationssystem gemäß den Ansprüchen 1 bis 4, wobei die Sicherheitskomponente so eingerichtet ist, dass sie ein elektromagnetisches Signal empfängt, das den Eingangssicherheitsschlüssel enthält.

6. Ein Postkasten, der ein Kommunikationssystem gemäß einem der Ansprüche 1 bis 5 aufweist, wobei als Reaktion auf die Identifizierung, dass ein erster Eingangssicherheitsschlüssel mit einem beliebigen Sicherheitsschlüssel aus dem ersten Satz von Sicherheitsschlüsseln übereinstimmt, die Sicherheitskomponente so eingerichtet ist, dass sie einen ersten Ausgangssicherheitsschlüssel sendet, wobei der erste Ausgangssicherheitsschlüssel Daten aufweist, die das Kommunikationssystem identifizieren.

7. Ein Postkasten, der ein Kommunikationssystem gemäß Anspruch 6 aufweist, wobei ein zweiter Eingangssicherheitsschlüssel von der Sicherheitskomponente empfangen wird, der von einer drahtlosen Schlüsselvorrichtung als Antwort auf den Empfang des ersten Ausgangssicherheitsschlüssels durch die drahtlose Schlüsselvorrichtung übertragen wurde.

8. Ein Postkasten, der ein Kommunikationssystem gemäß Anspruch 7 aufweist, wobei das Kommunikationsereignis an die erste Kommunikationsadresse als Reaktion darauf eingeleitet wird, dass die Sicherheitskomponente feststellt, dass der zweite Eingangssicherheitsschlüssel mit einem von einer Vielzahl von Sicherheitsschlüsseln aus einem zweiten Satz von Sicherheitsschlüsseln übereinstimmt.

9. Ein Postkasten, der ein Kommunikationssystem gemäß einem der Ansprüche 7 bis 8 aufweist, wobei der erste Eingangssicherheitsschlüssel Daten aufweist, die die drahtlose Schlüsselvorrichtung identifizieren.

10. Ein Postkasten, der ein Kommunikationssystem gemäß einem der Ansprüche 5 bis 9 aufweist, wobei der erste Ausgangssicherheitsschlüssel Daten aufweist, die den Postkasten identifizieren.

11. Ein Postkasten, der ein Kommunikationssystem gemäß einem der Ansprüche 1 bis 10 aufweist, wobei das Kommunikationsereignis ein Telefonanruf und/oder eine Übertragung von Daten und/oder eine SMS-Nachricht und/oder eine E-Mail und/oder ein Videoanruf ist.

12. Ein Postkasten, der ein Kommunikationssystem gemäß einem beliebigen der vorstehenden Ansprüche aufweist, wobei die Kommunikationsvorrichtung einen ersten, stromsparenden Modus, in dem die Kommunikationsvorrichtung nicht mit dem Kommunikationsnetzwerk verbunden ist, und einen zweiten, operativen Modus aufweist, in dem die Kommunikationsvorrichtung mit dem Kommunikationsnetzwerk verbunden ist, wobei die Kommunikationsvorrichtung so eingerichtet ist, dass sie als Reaktion auf den Empfang des Eingangssicherheitsschlüssels von dem ersten Modus in den zweiten Modus umschaltet.

## Revendications

1. Une boîte aux lettres comprenant un système de communication, dans lequel le système de communication comprend :
un dispositif de communication agencé pour effectuer des communications via un réseau de communication vers une première adresse de communication ;
un composant de sécurité agencé pour recevoir une clé de sécurité d'entrée ;
dans lequel le dispositif de communication est agencé pour initier un événement de communication à la première adresse de communication en réponse au composant de sécurité déterminant que la clé de sécurité d'entrée correspond à l'une quelconque d'une pluralité de clés de sécurité disponibles pour le composant de sécurité ;
**caractérisé en ce que** l'ensemble des clés de sécurité et les adresses de communication peuvent être mises à jour à distance par un serveur à un moment prédéterminé.

2. Une boîte aux lettres selon la revendication 1, dans laquelle
la pluralité des clés de sécurité disponibles pour le composant de sécurité comprend un ensemble de codes à séquence aléatoire.

3. Une boîte aux lettres selon la revendication 1 et
**caractérisé en ce que** la boîte aux lettres reçoit d'un serveur associé à la première adresse de communication, par l'intermédiaire du même réseau de communication, des mises à jour de données comprenant toute modification de la pluralité de clés de sécurité et/ou d'adresses de communication à utiliser par la boîte aux lettres ;
dans lequel le dispositif de communication communique ensuite à l'une des adresses de communication un événement de communication.

4. Une boîte aux lettres comprenant un système de communication selon l'une quelconque des revendications 1 à 3, dans lequel le dispositif de communication est agencé pour stocker une ou plusieurs adresses de communication et initier des événements de communication à la ou aux adresses.

5. Une boîte aux lettres comprenant un système de communication selon les revendications 1 à 4, dans lequel le composant de sécurité est agencé pour recevoir un signal électromagnétique contenant la clé de sécurité d'entrée.

6. Une boîte aux lettres comprenant un système de communication selon l'une des revendications 1 à 5, dans lequel, en réponse à l'identification du fait qu'une première clé de sécurité d'entrée correspond à l'une quelconque du premier ensemble de clés de sécurité, le composant de sécurité est agencé pour transmettre une première clé de sécurité de sortie, la première clé de sécurité de sortie comprenant des données identifiant le système de communication.

7. Une boîte aux lettres comprenant un système de communication selon la revendication 6, dans laquelle une deuxième clé de sécurité d'entrée est reçue par le composant de sécurité ayant été transmise par un dispositif à clé sans fil en réponse au dispositif à clé sans fil recevant la première clé de sécurité de sortie.

8. Une boîte aux lettres comprenant un système de communication selon la revendication 7, dans lequel l'événement de communication à la première adresse de communication est initié en réponse au composant de sécurité déterminant que la deuxième clé de sécurité d'entrée correspond à l'une quelconque d'une pluralité d'un deuxième ensemble de clés de sécurité.

9. Une boîte aux lettres comprenant un système de communication selon l'une des revendications 7 à 8, dans laquelle la première clé de sécurité d'entrée comprend des données identifiant le dispositif à clé sans fil.

10. Une boîte aux lettres comprenant un système de communication selon l'une des revendications 5 à 9, dans laquelle la première clé de sécurité de sortie comprend des données identifiant la boîte aux lettres.

11. Une boîte aux lettres comprenant un système de communication selon l'une des revendications 1 à 10, dans lequel l'événement de communication est un appel téléphonique et/ou une transmission de données et/ou un message sms et/ou un courriel et/ou un appel vidéo.

12. Une boîte aux lettres comprenant un système de communication selon l'une quelconque des revendications précédentes, dans lequel le dispositif de communication a un premier mode d'économie d'énergie, dans lequel le dispositif de communication n'est pas connecté au réseau de communication, et un second mode de fonctionnement dans lequel le dispositif de communication est connecté au réseau de communication, dans lequel le dispositif de communication est agencé pour passer du premier mode au second mode en réponse à la réception de la clé de sécurité d'entrée.
